# EUROPEAN PATENT APPLICATION

(11) **EP 1 939 836 A1**
(43) Date of publication of application: **02.07.2008**
(21) Application number: 07254987.6
(22) Date of filing: 20.12.2007
(51) Int. Cl.: G09B 11/00

(54) **Improvements in graphic recognition devices**

(30) Priority: 22.12.2006 GB 0625859
(71) Applicant: Louttit, Duncan Richard, High Wycombe Buckinghamshire HP13 7EA (GB)
(72) Inventor: Louttit, Duncan Richard, High Wycombe Buckinghamshire HP13 7EA (GB)
(74) Representative: Pendered, Timothy George

(57) **Abstract**

There is described a hand-held device for recognising markings on a substrate. The hand-held device has a body (101) that has light directing means (209), light detecting means (203), means for analysing the detected light (103), and means (105) for shielding the light detecting means from ambient light. The analysing means is able to determine whether or not the directed light is incident upon the markings on the substrate.

## Description

This invention relates to graphics recognition devices and in particular, though not exclusively, to devices for use as aids in teaching handwriting.

Handwriting is traditionally taught and learnt in schools through practical exercises in which a pupil copies the teacher as they construct a particular letter. Exercises typically consist of repeatedly copying a letter or string of letters until the fine motor skills associated with producing that particular letter or string of letters have been acquired. These exercises are often carried out in exercise books that provide a teacher with a method of reviewing the progress made by the student and allowing the pupil a visual record to compare with the letter he is attempting to copy.

Copying a teacher as he or she constructs a particular letter may, at the beginning of the learning process, be too difficult a skill to master. This is particularly the case for the very young, and those who may suffer from learning or physical disabilities. A technique that is often successful in such circumstances is for the pupil to learn the motor skills to produce a letter or word by tracing directly over a copy of that particular character or string of characters. Obviously, the pupil needs to be closely supervised throughout the learning exercise so that they can be made aware of any errors they are making. This places a significant burden on the teachers' time and resources.

Increasingly, technology is being used to improve upon these older methods, providing more interaction and stimuli for the pupils and making what can be a tedious process into a fun learning experience. Furthermore, technology is now increasingly being used to provide feedback to pupils about the accuracy of their handwriting practice. For example GB 2106693 discloses a system in which a pupil's pen additionally incorporates a light sensing device that can be used to track movement of the pen over a special template. WO 2005/057471 discloses a system in which an electronic light sensing and imaging unit has a receiver for a writing implement, and the device may comprise an analysis system dedicated to a particular optical analysis application, such as position determination based on images of a position-coding pattern.

According to the present invention there is provided a hand-held device for recognising markings on a substrate, comprising a body having means for directing light onto the substrate, means for detecting light reflected from the substrate, means for analysing said detected light to determine whether or not said directed light is incident upon said markings, and means for shielding said light detecting means from ambient light.

Embodiments of the invention will now be described, by way of example only, with reference to the drawings, in which:
Figure 1 is a diagrammatic illustration of a first embodiment of a graphics recognition device according to the invention,
Figure 2 is an enlarged view of the nib assembly of the device of Figure 1,
Figure 3 is an end view of the device,
Figure 4 is a view showing the internal detail of the nib assembly,
Figure 5 is a diagrammatic illustration of a second embodiment of a graphics recognition device according to the invention, and
Figure 6 is a diagrammatic illustration of a modified version of the device of Figure 1.

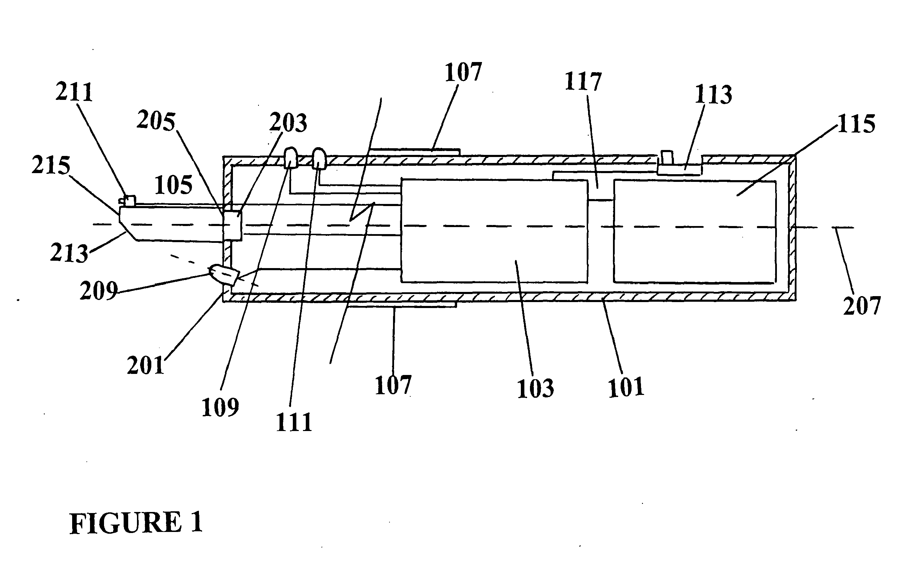

Figure 1 shows a graphics recognition device in the form of a handwriting teaching aid. The device is like a pen in overall shape and is designed to be held in the hand.

The device has a body 101, which in a preferred embodiment is made of plastics material, in the form of a hollow cylinder, sealed at each end. Here the body 101 is of a similar size and shape to a typical writing implement such as a fountain or ball point pen. The external shape of the body 101 may be profiled so that the user may only grasp it in a particular manner. For example, a grip area 107 may be provided on the body 101 that encourages the user, through the use of various surface profiling or contours, to grip the device in only one particular way that corresponds to a correct pen holding grip (left or right handed).

A green L.E.D. 109 and a red L.E.D. 111 extend through openings in the body 101 so that the light emitting surface of each is visible on the exterior of the body 101. In an alternative embodiment, a single red/green bi-colour L.E.D. may be used in place of the individual red and green L.E.D.s 109, 111. A main power switch 113 extends through another opening in the body 101 so that it may be activated by a force applied externally to the body. The switch 113 may preferably be a single pole single throw switch and these are well known in the art. Other types of non-momentary switches may be used.

A battery pack 115 is enclosed within the cavity 117 formed in the hollow body 101. The battery pack 115 may be a single high-capacity rechargeable battery, alternatively it may comprise of any number of individual non-rechargeable batteries, or any number of individual rechargeable batteries. Battery packs are well known in the art and will not be described in further detail.

A control module 103 is enclosed within the hollow body 101. Electrical connections are provided between the control module 103 and battery pack 115, green and red L.E.D.s 109, 111, and main power switch 113. The control module 103 is adapted to control an illuminating L.E.D. 209 to direct light, and to receive and analyse signals from a light sensing device 203. The control module 103 may be adapted to store the output of the analysis in the control module 103 or alternatively, in separate storage means. The control module may be adapted to provide calibration of the device.

At one end 201 of the body 101, the light sensing device 203 is arranged such that its light sensing surface 205 is flush with the end of the body 101. The light sensing device 203 is secured within the cavity 117 of the body 101 such that incident light external to the body 101 may fall upon its light sensing surface 205. The light sensing device 203 may be a phototransistor. In a preferred embodiment the light sensing device 203 is a large area photodiode. The light sensing device 203, and illuminating L.E.D. 209, are electrically connected to the control module 103.

At end 201 of the body 101, a nib assembly 105 is arranged. The nib assembly 105 comprises a hollow cylindrical tube, open at both ends, and having an internal diameter substantially the same, or slightly greater, than the diameter of the light sensing surface 205 of the light sensing device 203. Alternatively, the hollow cylindrical tube may have a smaller internal diameter than the diameter of the light sensing surface 205 wherein the area of the light sensing surface 205 that is not enclosed within the hollow cylindrical tube may be shielded so that no light may fall upon it. In this manner, any size of light sensing device 203 may be used but the only area of the light sensing surface that light will fall upon will be that part of the surface enclosed within the hollow cylindrical tube. Hence the size of line that may be used for hand-writing practice may be any width as long as it is greater or equal to the internal diameter of the hollow cylindrical tube of the nib assembly.

The nib assembly 105 is attached around the circumference of one of its open ends to the end 201 of the body through which the light sensing device 203 protrudes. This attachment may be by any known attachment method such as mechanical bonding, chemical bonding and the like. A contact switch 211 is attached to the external surface of the nib assembly 105, at the remaining open end, such that its operating means extends a short distance beyond the tip 215 of the nib assembly 105. Here the contact switch 211 is a push to make switch, and is arranged such that the operating means of the switch is closed by being pressed against a surface 217 as the tip 215 of the device is brought into contact with the surface 217. The contact switch 211 is electrically connected to the control module 103. In an alternative arrangement, the nib assembly 105 itself may act as a switch, for example by being touch sensitive and switching on on contact with a surface or by being movably mounted on the body and switching on when pressed aginst the surface.

The hollow cylinder of the nib assembly 105 is arranged such that its longitudinal axis is coincident with the centre of the light sensing surface 205 of the light sensing device 203 and so that it concentrically surrounds the light sensing surface. The illuminating L.E.D. 209 is arranged so that its longitudinal axis is at an angle to the longitudinal axis of the nib assembly 105 such that when the illuminating L.E.D. 209 is driven to produce light by an electrical signal from the control module 103, its light is directed in the vicinity of a notch 213 in the nib assembly 105. In a preferred embodiment the length of the nib assembly 105 may be approximately 10 mm so that the arrangement approximates to the appearance of a pen and its nib. Also in this preferred embodiment, the green L.E.D. 109 and the red L.E.D. 111 (or alternatively a single red/green bi-colour L.E.D.) are located on the body 101 close to the nib assembly 105 such that they occupy the same visual field as the nib assembly 105 and can therefore easily be seen by a user in use of the device.

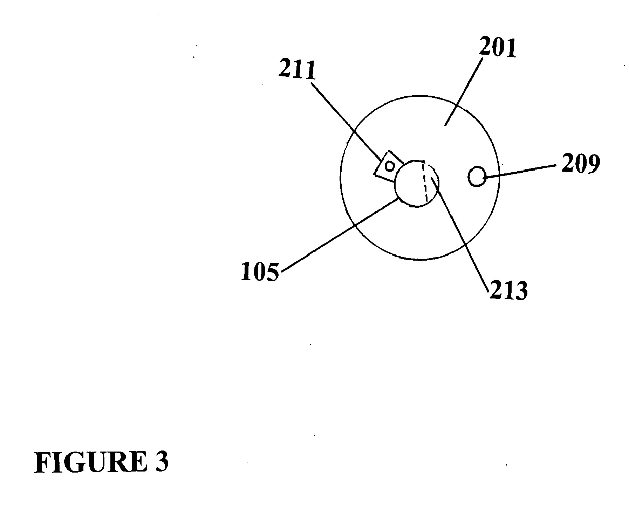

The notch 213 is provided in the wall of the hollow cylinder close to the end of the nib assembly 105 furthest from the body 101, such that the notch 213 extends to the open end or tip 215 of the cylinder. In a preferred embodiment the angle of the notch 213 is 45 degrees to the longitudinal axis of the nib assembly 105 but other angles may be used and the invention is not limited in this respect. As will be seen in Figure 3, the notch 213 is arranged so that it is in the same angular sector of the nib assembly 105 as the angular orientation of the illuminating L.E.D. 209 with respect to the nib assembly 105. The notch 213 is to allow light from the illuminating L.E.D. 209 incident upon a surface or substrate to enter into the interior of the nib assembly 105, as will be described in more detail.

In operation, a teacher may draw a shape representing a letter or word which is to be copied, using a black pen on a typical sheet of white paper. Use of a specific type of black ink is not necessary nor is it necessary that a particular whiteness of paper be used so long as a good contrast is achieved between the white and black. The following embodiment of the invention will be described using the system of black lines on white background but it should be understood that the invention would also be applicable to white lines on a dark background. The device is turned on by the user sliding the main power switch 113 to the on position. By sliding the switch to the off position at the end of the exercise, battery life may be conserved when the device is put away, even if the contact switch 211 is accidentally pressed.

The user applies the tip 215 of the device i.e. the open end of the nib assembly 105 to the page 217 in a similar motion to that used with the nib of a normal pen, and attempts to follow as accurately as possible the shape drawn by the teacher. As the tip 215 is pressed against the surface 217, the contact switch 211 is also pushed against the surface 217 closing the connection and activating the device. This feature ensures that an indication of line-following accuracy is only produced when the tip 215 of the device is pressed against the surface 217.

When the device is activated by the contact switch 211 being closed, the control module 103 lights up the illuminating L.E.D. 209. Light from this L.E.D. 209 hits and illuminates the surface 217 below the tip 215 of the device, i.e. that portion of the surface 217 that is enclosed within the bore of the nib assembly 105, via the notch 213. Light from the illuminating L.E.D. 209 strikes the surface 217 below and reflects off it and into the internal bore of the nib assembly 105. Apart from the notch 213, the nib assembly 105 otherwise acts to shield ingress of ambient light, from overhead lights for example, into the interior. Thus incidence of ambient light onto the light sensing device 203 is reduced. In this manner erroneous results that may be produced by widely varying ambient light levels are reduced. Because the principal light source that reaches the light sensing device 203 is now the illuminating L.E.D. 209 which is of a constant brightness output, it is a valid assumption that all fluctuations in the intensity of the light reaching the light sensing device 203 are due to the changing reflectivity from the surface 217 which occurs when changing from a white to a black area for example.

The reflected light travels up through the interior of the nib assembly 105 whereupon it strikes the light sensing surface 205 of the light sensitive device 203 which in turn generates a signal proportional to the amount of light received. The amount of light reflected from a lighter surface is greater than from a darker surface. Correspondingly, if the tip 215 of the device is not over the line to be copied i.e. it is over a white portion of the surface 217, the amount of reflected light entering the light shield 105 and striking the light sensitive device 203 will be high whereas if the device is over the line to be copied i.e. it is over a darker portion of the surface 217 then the reflected light striking the light sensitive device 203 will be lower.

The light falling on the light sensitive device 203 produces a current that is proportional to the amount of light striking the light sensitive surface 205. This current is passed to the control module 103 where it is measured and compared in the control module 103 with a threshold value. Alternatively, the current may be passed to the control module 103 where its accumulation is measured over a set interval of time. The value reached at the end of the time interval is then compared in the control module 103 with the threshold value. The threshold value represents a notional division; a value above the threshold is interpreted to mean that the tip 215 of the device is over a white area i.e. not over a line to be copied, and a value below the threshold is interpreted to mean that the tip 215 of the device is over a black area i.e. over the line to be copied. It should be understood that in a reversed situation for example if the lines to be followed with the device were light and the background was dark, then the opposite meanings would be applied to values above and below the threshold.

Depending on the result of the comparison, either the green L.E.D. 109 or the red L.E.D. 111 is activated to provide a visual signal of whether the tip 215 of the device is on the line or off the line. In one embodiment, the red L.E.D. 111 may light if the tip 215 of the device is not on the line whilst the green L.E.D. 109 may light if the tip 215 of the device is on the line, although it should be understood that the inverse of this indication might alternatively be used. For the embodiment in which a single bi-coloured L.E.D. is used for indicating whether the tip 215 of the device is on the line, the command module 103 sends an appropriate signal, which may be a specific voltage for example, to the L.E.D. in order to produce either the red or green indication according to the criteria above.

In yet another embodiment, the indicating L.E.D.'s 109, 111 may be replaced by a buzzer so that an auditory signal is produced when the tip 215 of the device is not on the line and no auditory signal is produced all the time that the tip 215 of the device is on the line. In another embodiment this arrangement may be reversed so that no auditory signal is produced when the tip 215 of the device is not on the line and an auditory signal is produced all the time when the tip 215 of the device is on the line. In an alternative embodiment the indicating L.E.D.'s 109, 111 may be replaced by a unit capable of generating tactile stimuli such as vibration. This vibration may be provided when the tip 215 of the device is not on the line or alternatively when the tip 215 of the device is on the line. In other embodiments, a combination of one or more of these methods may be used in order to communicate to the user whether the tip 215 of the device is on the line or not.

The control module may be arranged to keep a cumulative record of how many times the current per unit time value was below and above the threshold value during use of the device. The control module may generate a ratio of the number of values above the threshold to number of values below the threshold per word and, depending on whether this ratio is above or below a second user definable threshold, will give the user an indication of their accuracy in tracing.

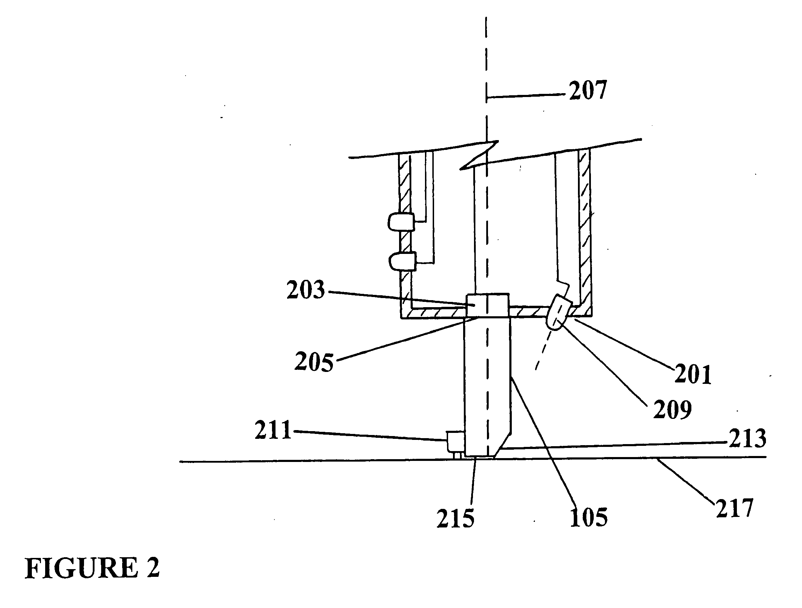

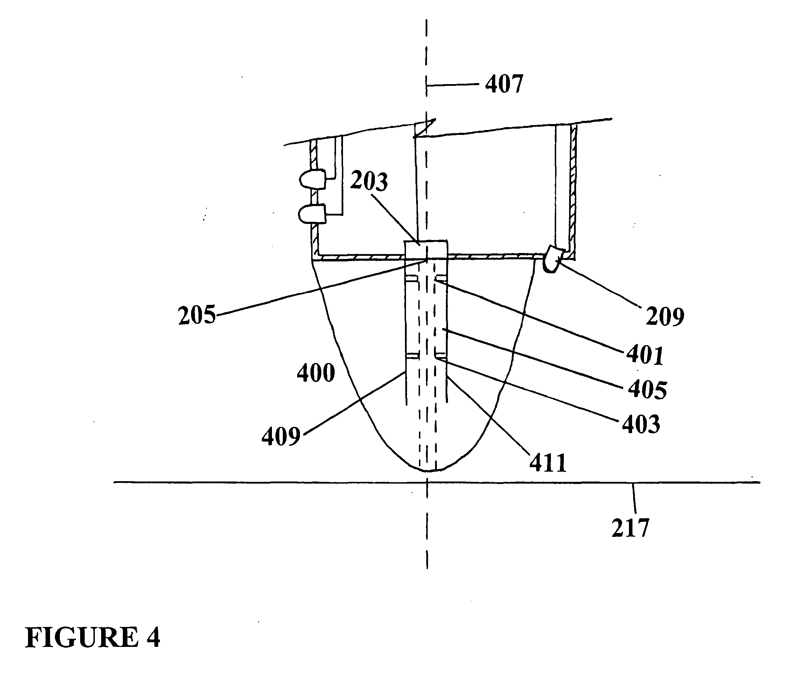

Figure 4 illustrates an alternative embodiment of the nib assembly 400. In place of the cylindrical hollow tube of Figure 2, a hollow shape of any cross section may be provided. Two spaced holes 401, 403 are provided at opposed ends of a cavity 405 such that the centres of the two holes 401, 403 are on the same longitudinal axis. In a preferred embodiment, the cavity 405 inside the hollow shape may be of a dark colour or alternatively may be coated with a light absorbing material in order to reduce internal reflections within the cavity. The nib assembly 400 is placed in the same position as the nib assembly 105 of Figure 1, i.e. so that the light sensitive device 203 is adjacent to one of the spaced holes 401 and so that the centre of its light sensing surface 205 is on the longitudinal axis formed by the two centres of the two spaced holes 401, 403. The nib assembly 400 may be provided with a contact switch in a similar manner as contact switch 211 of Figure 2, or alternatively, nib assembly 400 may itself form part of a switch mechanism, as described above. The illuminating L.E.D. 209 is arranged so that its longitudinal axis is at an angle to the longitudinal axis formed by the spaced holes 401, 403 such that when the illuminating L.E.D. 209 is driven to produce light by an electrical signal from the control module 103, its light falls on an area on the surface 217 that is located substantially coincident with the longitudinal axis formed by the spaced holes 401, 403.

In operation the spaced hole 403 furthest from the light sensitive device 205 is placed against or near to the surface 217 bearing the graphic. In this way, the light sensitive device 203 is constrained to "see" only that small area of surface 217 that is immediately visible through both of the spaced holes 401, 403. In other words, only light rays reflecting from the surface 217 that are essentially parallel to the longitudinal axis 407 formed by the two spaced holes 401, 403 will end up striking the light sensing surface 205. Most rays of ambient light will be reflected at an angle other than parallel to the longitudinal axis 407 formed by the two spaced holes 401, 403 and so will impinge on the side walls 409, 411 of the cavity 405 where they will be absorbed to a degree. Consequently, ambient light reaching the light sensitive device 205 will be reduced. Comparison of the amount of reflected light is carried out in the manner already disclosed in reference to Figure 1.

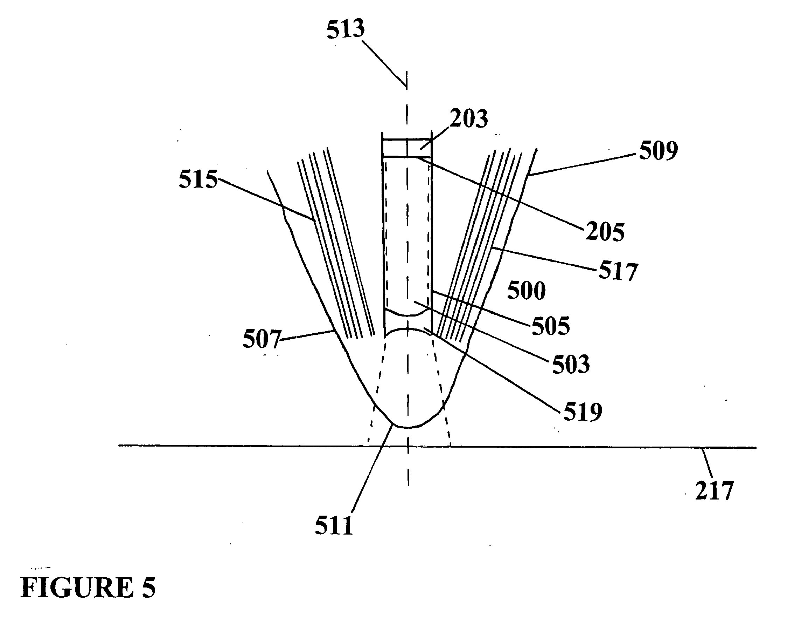

Figure 5 illustrates an alternative form of nib assembly 500. A hollow frusto-conical section 501 is provided having a central bore 503 defined by a cylinder 505 constructed from a transparent material, and external walls 507, 509 made of an opaque material. A light sensitive device 203 is located centrally within this bore 503, a short distance back from the apex 511 of the frusto-conical section 501, and with the centre of its light sensing surface 205 coinciding with the longitudinal axis 513 of the frusto-conical section 501. A collimating lens 519 or lenses may be placed between the light sensing device 203 and the end of the cylinder 505 closest to the apex 511. One or more optical fibres 515, 517 are arranged around the central bore 503 and terminate at an angle to the transparent walls 505 of the bore 503. The optical fibres 515, 517 terminate closer to the apex 511 of the frusto-conical section 501 than the position of the light sensitive device 203. Light from the illuminating L.E.D. 209 (not shown in the Figure for clarity) is provided to the other end of the optical fibres 515, 517. The nib assembly 500 may be provided with or arranged as part of a contact switch in a similar manner as described above.

In operation, the apex 511 of the frusto-conical section 501 is applied to the surface 217 bearing the graphic. Due to the opaque nature of the external walls 507, 509 of the frusto-conical section 501, only a small amount of ambient light is able to penetrate into the central bore 503 via the opening at the apex 511. Light from the illuminating L.E.D. 209 is passed through the optical fibres 515, 517 and exits from the fibres at their termination near to the transparent walls 505 of the central bore 503. The light from the optical fibres 515, 517 is able to pass through the transparent walls 505 of the bore 503 and, due to the angle of the fibres to the central bore 503, illuminates the area of the surface 217 under the central bore 503. Thus the majority of the light that is reflected from the surface 217 back up into the bore 503 to strike the light sensing surface 205 of the light sensitive device 203 is from the illuminating L.E.D. 209 the initial brightness of which is constant. Comparison of the amount of reflected light is carried out in the manner already disclosed in reference to Figure 1.

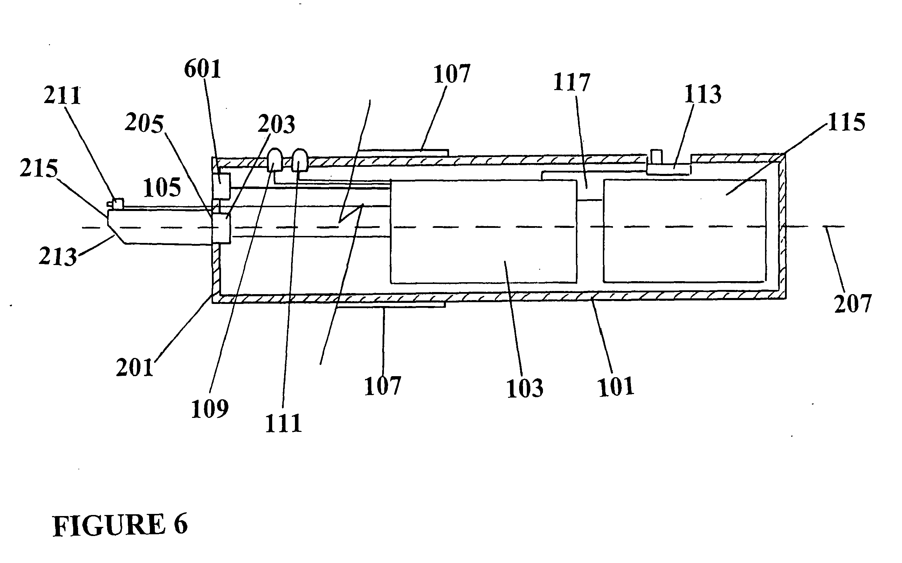

Figure 6 illustrates a further embodiment of graphics recognition device. This embodiment is substantially similar to the embodiment of Figure 1, except that in this embodiment, two light sensing devices 203, 601 are provided. Light sensing device 203 operates in a similar manner to that described in relation to Figures 1 and 2. Light sensor 601 is adapted to have a wide field of view and to detect ambient light across a wide area.

The light falling on the light sensitive devices 203, 601 produces two corresponding currents that are proportional to the amount of light striking the light sensitive devices 201, 601 respectively. These currents are passed to the control module 103 where they are measured. The measurement produced by the wide area light sensing device 601 may be compared with the measurement corresponding to light sensing device 203. The measurement from light sensing device 203 is derived from light detected from the area immediately under the nib assembly 105. The measurement from light sensing device 601 is derived from ambient light from all around, including the (white) area on the surface which surrounds the line to be sensed. If the measurement from light sensing device 203 is similar to that from light sensing device 601, this is an indication that the nib assembly 105 is over a white space, ie not over a line. If the output from the light sensing device 203 is significantly less than that of light sensing device 601, on the other hand, this indicates that the nib assembly is over a black line.

The illuminating L.E.D. 209 in the devices mentioned above conveniently produces white light similar in spectrum to ambient light. This enables the device to "see" markings of different kinds and colours on a surface, much like the human eye. In a further embodiment, a filter may be placed between light sensing device 203 and any incoming incident light. The filter is adapted to filter particular wavelengths from the light incident on the light sensing device 203. These wavelengths may be the wavelengths that correspond to invisible light such as infra-red or ultra-violet. Such filtering is intended to make the response of the light sensing device more similar to the human eye.

The control module 103 may be arranged to modulate the illuminating L.E.D. 209. The signal from the light sensing device 203 would then consist of two components: one component would be due to ambient light and the other due to the illuminating L.E.D. 209. The control module 103 can then distinguish between these two components on the basis of the modulation characteristics. Ambient light will in general have modulation frequencies related to mains electrical frequency. The illuminating L.E.D. modulation should therefore be chosen to be easily distinguishable from these. One way to do this would be by synchronous demodulation.

Thus in operation the control module 103 only measures light modulated to a specific modulation scheme thus the light detected will only be from the modulated light source which is of a constant brightness and it can be assumed that any changes in the intensity of the modulated light falling onto the light sensing device are due to a change in reflectivity from the surface (i.e. a different coloured surface - black line or white background for example) rather than the effect of ambient light.

A particular advantage of the devices described above is that they are self-contained and robust. Only the device itself is required, there is no need for ancillary support equipment such as digital screens and lighted templates etc. A teacher can produce practice sheets in a quick and efficient manner by simply drawing any shape or character they desire onto a standard piece of paper with a standard pen. Not only is this quick and efficient but it allows a teacher to address the specific needs of an individual easily, say for example in learning a particular character that they have difficulty with. Printed material may also be used with the invention thus allowing material to be easily downloaded from the internet or produced on a personal computer. Training templates to copy can be produced in a variety of ways very quickly and easily.

Another advantage is that the created, downloaded and/or printed training templates are not destroyed in the training process. When practicing hand-writing using conventional methods it is usual for the training materials to be written over in pen for example. Using the device described above, any templates produced can be used many times over.

A further advantage is that teaching can be tailored to suit an individual's needs and capabilities, since the area of line detected by the device is equivalent to the diameter of the light shield 105 (which is advantageously the same diameter as a typical pen nib). Asking an individual to trace a simple line that is much wider than the light shield 105 allows the tip 215 of the device to be moved around significantly before an indication is given that the tip 215 has left the line. This would be suited to a novice or someone who has not developed sufficient motor skills to control a pen to a high degree of accuracy. As the individual develops, the complexity of the line can be increased and/or the width reduced thus demanding more skill and accuracy from the user to stay within the line.

A further advantage is that the individual can receive constant and immediate feedback from the device regarding the accuracy of their line following. A user can immediately tell if their efforts are correct without reference to a tutor which allows a large amount of practice to be achieved in a short time to develop the fine motor skills necessary for hand-writing. Also by using particular indications of accuracy such as coloured lights, sounds, or tactile stimuli, the system becomes more like a game to a child rather than a boring teaching aid, with corresponding motivational benefits.

A further advantage is that by using a cumulative error system, a user can also monitor their progress over an entire word or passage which simplifies the monitoring of overall performance and improvements, and recording such.

## Claims

1. A hand-held device for recognising markings on a substrate, comprising a body having
means for directing light onto the substrate,
means for detecting light reflected from the substrate,
means for analysing said detected light to determine whether or not said directed light is incident upon said markings, and
means for shielding said light detecting means from ambient light.

2. A device as claimed in claim 1 wherein said shielding means comprises a nib assembly through which the reflected light is arranged to pass.

3. A device as claimed in claim 2 wherein the light from the light directing means is also arranged to pass through said nib assembly.

4. A device as claimed in claim 2 or claim 3 wherein said nib assembly comprises means for focusing the reflected light.

5. A device as claimed in claim 4 wherein the focussing means comprises at least two spaced apart holes.

6. A device as claimed in claim 4 or claim 5 wherein the focussing means includes a lens.

7. A device as claimed in any preceding claim wherein said light directing means includes means for modulating the light which is directed onto the substrate.

8. A device as claimed in any preceding claim and further comprising means for generating a signal in response to an output from the analysing means.

9. A device as claimed in claim 8 wherein said signal generating means produces a visual and/or audible and/or tactile signal.

10. A device as claimed in any preceding claim and further including means for activating the device when it is brought into contact with the substrate.

11. A device as claimed in claim 10 wherein the activating means comprises a switching device on the nib assembly.

12. A device as claimed in any preceding claim and further comprising means for storing output from the analysing means.

13. A hand-held device for recognising markings on a substrate, comprising a body having
means for directing light onto the substrate,
means for detecting light reflected from the substrate,
means for analysing said detected light to determine whether or not said directed light is incident upon said markings, and
means for shielding said light detecting means from ambient light, the device further comprising
means for activating the device when it is brought into contact with the substrate, and
means for generating a signal in response to an output from the analysing means, which signal is relayed instantaneously to a user of the device,
and wherein said light directing means uses light that is visible to the human eye.
